Europäisches Patentamt

(19) European Patent Office    (11) Numéro de publication: **0 014 659**

Office européen des brevets    **B1**

(12) **FASCICULE DE BREVET EUROPEEN**

(45) Date de publication du fascicule du brevet: **10.10.84**    (51) Int. Cl.³: **F 16 L 11/12**

(21) Numéro de dépôt: **80400181.6**

(22) Date de dépôt: **05.02.80**

(54) **Dispositif souple d'aspiration de fluide à grand débit, notamment pour le pompage de l'eau de mer en profondeur.**

(30) Priorité: **12.02.79 FR 7903420**

(43) Date de publication de la demande:
**20.08.80 Bulletin 80/17**

(45) Mention de la délivrance du brevet:
**10.10.84 Bulletin 84/41**

(84) Etats contractants désignés:
**DE GB NL SE**

(56) Documents cités:
**FR-A- 721 430**
**FR-A- 762 731**
**FR-A-2 326 229**
**GB-A- 758 350**
**GB-A- 782 670**
**US-A-4 116 009**

(73) Titulaire: **Grihangne, André Emile**
**186, Avenue Victor Hugo**
**F-75116 Paris (FR)**

(72) Inventeur: **Grihangne, André Emile**
**186, Avenue Victor Hugo**
**F-75116 Paris (FR)**

(74) Mandataire: **Moulines, Pierre et al**
**Cabinet BEAU de LOMENIE 55, rue**
**d'Amsterdam**
**F-75008 Paris (FR)**

Courier Press, Leamington Spa, England.

## Description

La présente invention concerne un dispositif souple d'aspiration de fluide à grand débit et faible perte de charge.

Par exemple, le fluide peut être de l'eau de mer aspirée à grande profondeur depuis la surface pour constituer la source froide d'une centrale de conversion de l'énergie thermique de la mer dont la source chaude est l'eau de surface.

Dans une centrale flottante de ce type, les efforts alternés et aléatoires que la plate-forme flottante sur mer houleuse applique sur une conduite immergée suspendue furent notamment à l'origine de l'échec des essais effectués par Georges Claude près des côtes cubaines en 1929—1930 et poursuivis au large de Rio de Janeiro de 1934 à 1935. Des causes semblables firent abandonner le projet de l'Ingénieur Nizery près d'Abidjan dans l'immédiat après-guerre. Or, le dispositif souple selon l'invention présente l'immense avantage de s'accommoder de ces efforts dont les effets sont considérablement réduits.

Par ailleurs une centrale flottante ou côtière fonctionnant sur ce principe suggéré par d'Arsonval en 1881 et expérimentée par Georges Claude requiert pour délivrer une puissance de 100 MW actuellement envisagée un débit d'eau froide d'environ 400 m³/s puisée à 1000 m de profondeur. La puissance nécessaire au pompage est en raison directe de la perte de charge subie par le fluide, elle-même proportionnelle au coefficient de frottement de la paroi et à la longueur de la conduite et, pour un débit donné, inversement proportionnelle à la cinquième puissance du diamètre de la conduite d'aspiration. Ainsi, la limitation de cette puissance impose l'installation d'une conduite de très grand diamètre. Dans ce cas, pour une vitesse d'aspiration voisine de 1 m/s, le diamètre atteint 20 m.

Pour une centrale de 5 MW actuellement projetée et un débit de 20 m³/s, le diamètre de la conduite atteint encore 5 m.

On connaît la possibilité de réaliser en matériaux rigides—métal, béton armé, résines armées, produits organiques tels que le polyéthylène, etc.—des conduites d'aspiration lisses dans lesquelles la vitesse de l'écoulement du fluide induit une dépression par rapport au milieu ambiant à laquelle la paroi constitutive doit résister pour conserver sa géométrie et ne pas s'aplatir. De telles réalisations se rencontrent couramment pour des conduites de diamètre usuel. Lorsque le diamètre devient important et que des sollicitations extérieures sont appliquées à la paroi, maints inconvénients se présentent, notamment pour les exemples d'application précités du point de vue de rendement constructif, du coût de fabrication et d'installation, de la fiabilité, de l'endurance, des difficultés de fabrication et d'installation et de relevage éventuel.

Du point de vue du rendement constructif, la masse minimale de la conduite cylindrique qui doit résister à l'implosion sous l'action de la pression différentielle ΔP sur sa paroi externe dépend de la valeur minimale admissible du rapport de l'épaisseur (e) de la paroi au diamètre (D) de la conduite. D'après A. E. H. Love, le ΔP critique d'instabilité de la paroi des tubes minces (e/D<0,025) est donné par la formule:

$$\Delta P \ cr=[2 \cdot C \cdot E \cdot /(1-\mu2) \cdot (e/D)^3$$

dans laquelle:

E est le module d'élasticité du matériau constitutif—kg/cm²

C est le facteur de correction de défaut de circularité et de tolérance sur l'épaisseur e:

$$C=(D \ min/D \ max)^3 \cdot (e \ min/e \ max)^3$$

$\mu$ est le coefficient de Poisson

Les facteurs d'environnement marin, tel qu'un courant de 0,5 à 0,7 noeud, placent la conduite dans un champ de pression hétérogène et instationnaire lorsque le nombre de Reynolds R est supérieur à $10^6$, ce qui est le cas. Il convient d'affecter ΔP cr d'un coefficient de sécurité $\alpha$ de l'ordre de 4 au minimum pour évaluer la pression différentielle admissible P a=P cr/$\alpha$. Pour une conduite en acier de 5 m de diamètre caractérisée par E=2.$10^6$ kg/cm², $\mu$=0,295 et soumise à une dépression interne en service de 50 mb (≃0,050 kg/cm²), la valeur minimale admissible pour e/D calculée comme précédemment avoisine 0,002, soit e>10 mm. La masse minimale d'une telle conduite de 1000 m de long, indépendamment du lest nécessaire à sone extrémité inférieure pour réduire sa déformation en flexion due à l'action du courant, atteindrait 1225 t et un poids apparent d'environ 1050 t.

Quant à l'emploi d'autres matériaux rigides tels que béton armé ou résines armées, leur module d'élasticité beaucoup plus faible conduirait à une masse bien supérieure, même en considérant leur plus faible densité. L'emploi d'alliages d'aluminium ou de titane paraît exclu en regard de leur prix. Restent certains matériaux organiques tel le polyéthylene. Mais les difficultés de fabrication, d'acheminement et d'installation d'éléments très volumineux pour des conduites rigides d'un diamètre de plusieurs mètres ne les rend pas compétitifs avec les matériaux souples.

Par le brevet FR—A—2.326.229, il est bien connu, selon un premier mode de réalisation (fig. 12) d'utiliser un conduit d'aspiration entièrement souple constitué de deux parois concentriques 64 et 65 reliées entre elles par des membranes annulaires 68 régulièrement espacées et percées de trous 69. Le mise en pression effective de l'espace interparois confère à l'ensemble la forme d'un empilage de tores sécants adjacents au droit des membranes mitoyennes 68 et prend le profil d'une tuyauterie annelée. La tuyauterie ainsi rigidifiée par la pression interne à cette enveloppe régnant au sein de ces tores en communication entre eux par les trous 69 est en équilibre sous l'effet des tensions induites dans les parois souples. A tout instant et en tous les points des cercles d'intersection entre les membranes annulaires et les parois, la résultante des tensions méridiennes et de la tension radiale dans la membrane considérée est nulle. Une manche souple 71 est disposée à l'intérieur de ladite tuyauterie. La dépression appliquée dans l'espace annulaire 72 entre la manche et la tuyauterie, supérieure à la dépression créée par l'aspiration au sein de la manche, contraint ladite manche à prendre une forme parfaitement cylindrique. Celle-ci, par ailleurs, porte à sa partie inférieure le poids apparent du pavillon d'aspiration 73 dont une collerette le relie à l'extrémité inférieure de la tuyauterie 64, 65, 68 pour fermer l'espace annulaire 72 et permettre de maintenir la dépression effective qui lui est appliquée.

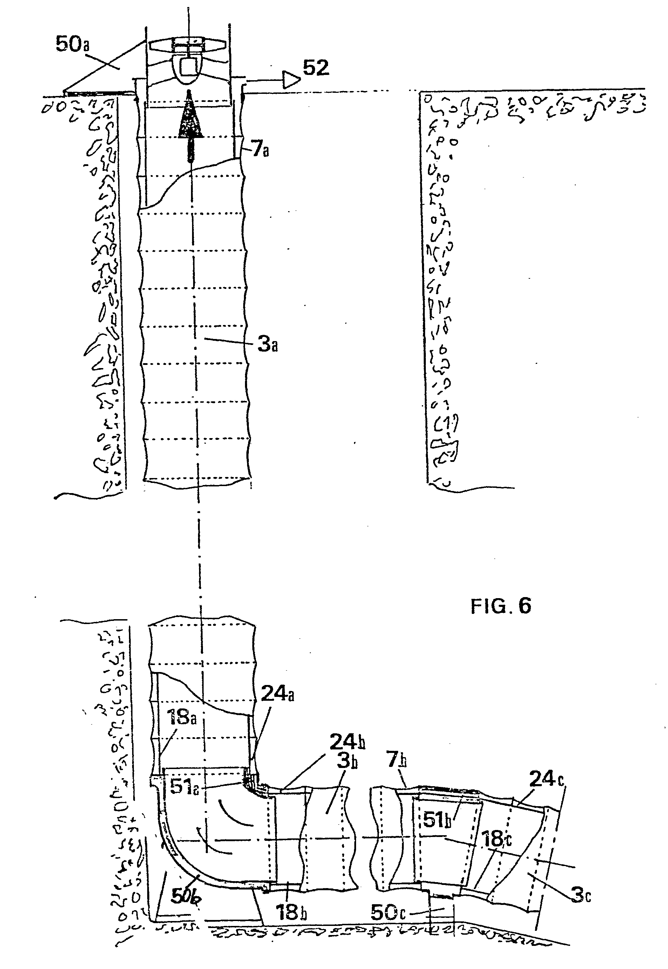

Selon un deuxième mode de réalisation (fig. 5), la tuyauterie entièrement souple à double paroi est obtenue par construction par l'empilage de galettes tubulaires confectionnées à plat en forme de couronnes 26 assemblées par collage ou vulcanisation au moyen de cales d'épaisseur également souples 27 munies d'orifices 31 et qui se comportent exactement comme les membranes du mode précédent.

La mise en pression interne effective de l'ensemble lui confère la même géométrie que précédemment sous l'effet des tensions méridiennes et radiales de même nature.

Dans ce cas, il est prévu de jonctionner entre eux des tronçons successifs de la tuyauterie (fig. 7), avant leur mise en pression au moment de l'installation, au moyen de doubles jantes rigides 32 qui n'ont que cette seule fonction et qui ne sont pas nécessaires au maintien de la forme générale cylindrique d'équilibre de la tuyauterie dont l'interparois est pressurisé.

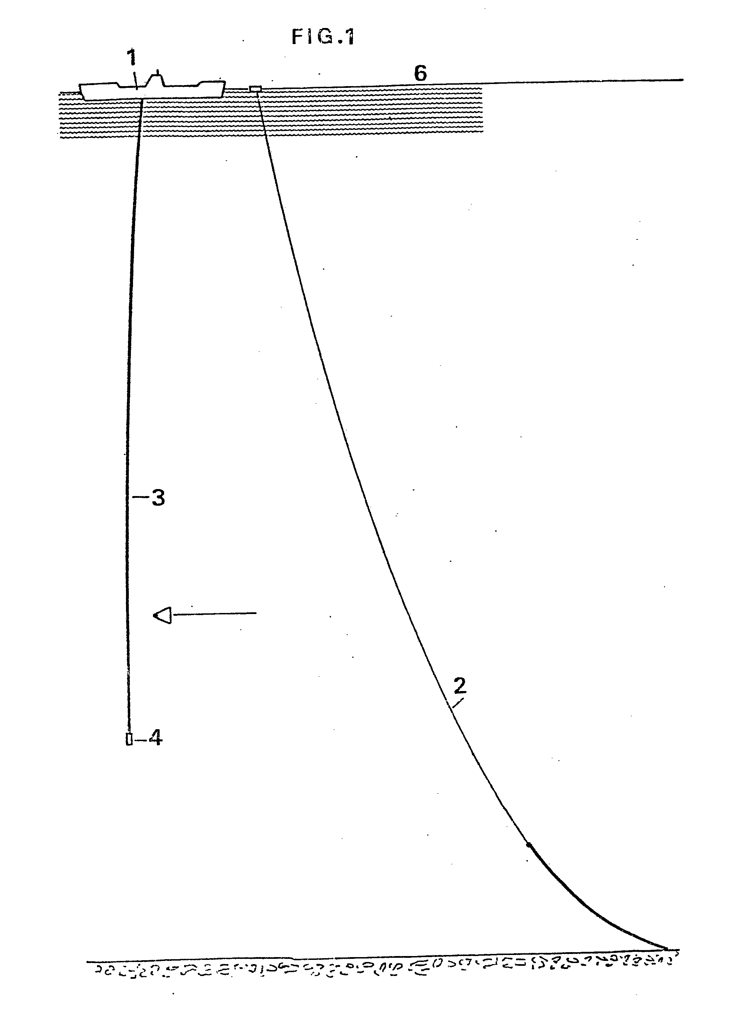

Par le brevet GB—A—758 350, il est connu d'utiliser un dispositif souple d'aspiration ou de refoulement d'air (fig. 1) comportant une manche souple 1 à l'extérieur de laquelle sont associés des anneaux d'acier 8. Dans la position verticale, des câbles 12, 13 extérieurs solidarisés à quelques uns des anneaux 8 mettent la manche souple en tension. En cas d'utilisation du dispositif en aspiration, un renfort rigide hélicoïdal 15 associé extérieurement à la paroi souple est prévu pour éviter son écrasement.

Par le brevet GB—A—782 670, il est connu d'utiliser des conduites souples constituées d'une manche intérieur 1 dépourvue de moyens rigides et d'un fourreau 5 d'isolation thermique dont la paroi est maintenue en forme généralement cylindrique par des moyens rigides 9 associés à l'extérieur de ladit paroi. Dans l'espace annulaire entre fourreau et manche, de l'air en provenance de l'air chaud aspiré, passant par des trous ménagés dans la paroi de la manche, est supposé circuler pour provoquer le refroidissement par évaporation d'eau imprégnant un support sous forme de mousse.

L'objet principal de l'invention est de réaliser un nouveau dispositif souple permettant l'aspiration de grande débits d'eau de mer à une grande profondeur et sous une faible perte de charge à partir d'une installation de pompage sur une plate-forme flottante ou côtière par un agencement de composants souples tels qu'en fonctionnement, la différence de pression se trouvant appliquée de part et d'autre des parois souples desdits composants engendre dans celles-ci des tensions importantes qui contribuent efficacement à la stabilité des formes de révolution que prennent ces parois, de telle sorte que ces tensions puissent être calculées avec précision en fonction des dimensions, de la forme et de la valeur de ladite pression différentielle afin d'obtenir un rendement constructif plus élevé, une plus grande fiabilité et un coût inférieur à ce qu'autorise l'état actuel de la technique tout en permettant une grande facilité d'acheminement et d'installation sur le site choisi.

Le second objet de l'invention est d'appliquer la même technologie en l'adaptant à la réalisation et à l'installation d'un conduit souple d'aspiration d'air vicié au fond d'un puits de mine par exemple.

Dans l'état actuel de la technologie des conduites connues, le brevet FR—A—2 326 229 permet d'atteindre la plupart des buts énoncés dans le cas de pompage de l'eau de mer à l'exception de la réduction du coût de fabrication. En effet, la fabrication de la tuyauterie constituée d'une suite de tores sécants sous l'effet de la pressurisation de l'interparois conduit à un prix élevé et à une fiabilité douteuse compte tenu du nombre élevé de jonctions de tissus enduits. Par contre, la stabilisation de sa forme ne nécessite pas la mise en tension parallèlement à son axe par un moyen quelconque. Le poids apparent du pavillon d'aspiration n'a pour effet significatif que de maintenir le conduit immergé au voisinage de la verticale. Le rendement constructif par rapport à celui de la présente invention s'en trouve diminué.

Le brevet GB—A—758 350 fait appel à la mise en tension des câbles extérieurs à la manche souple et assujettis de loin en loin à des anneaux solidarisés à la paroi extérieure de la manche. La redondance des moyens fait qu'il existe seulement deux possibilités: ou bien la paroi souple est échantillonnée pour supporter un lest créant cette tension à la verticale et les câbles sont inutiles, ou bien les câbles reprennent le poids apparent du lest et la paroi n'est pas raidie, mais simplement guidée. De plus, appliquée au pompage d'eau de mer à grande profondeur, une telle conduite présenterait des défauts flagrants: le dépression dans la manche résulte de la somme de la perte de charge intégrée sur toute la longueur qui peut atteindre 2.000 mètres ou plus, et de la différence de densité, liée à la différence de température et de salinité entre les eaux profondes et les eaux de surface. Cette dépression atteint l'équivalent d'une colonne d'eau de plus de deux mètres, soit 20.000 pascals sur une profondeur de pompage de 1.000 mètres. Elle impose aux éléments de paroi de la manche compris entre deux anneaux consécutifs une flèche leur conférant la forme de diabolos dont la valeur est f=R(1—cos $\theta$) ou R est le rayon de la courbure concave que prennent les génératrices et $\theta$ est le demi-angle au sommet de l'arc formé entre deux anneaux rigides. La tension méridienne est T=sp. R où sp est la pression différentielle appliquée à la paroi en fonctionnement. Encore la forme en diabolo ne peut-elle être prise que si le matériau de la paroi accepte de se comprimer tangentiellement aux sections droites de la manche. Cette possibilité ne peut être assurée que dans le cas où la technologie de fabrication de la paroi est conçue pour cela. Or, il est précisément fait appel à une renfort rigide hélicoïdal externe dans le cas où la conduite doit fonctionner en aspiration. Les forces en jeu ont tendance à arracher de ce renfort externe et des anneaux externes la paroi qui leur est assujettie. Une conduite réalisée selon ce mode de réalisation ne peut accepter que de très faibles dépressions et ne peut convenir au pompage d'eau en profondeur.

Dans le brevet GB—A—782.670, la conduite est adaptée au refoulement d'air, notamment d'air chaud, mais ne peut pas fonctionner en aspiration. En effet, en vertu du théorème de Bernouilli, si les pressions totales sont sensiblement égales de part et d'autre de la paroi de la manche souple guidant le débit d'air aspiré, il n'en est pas de même des pressions statiques compte tenu de l'évidente différence de vitesse de l'air dans l'espace annulaire et dans la manche. La manche n'est pas stabilisée et flotte ou s'écrase au cours de l'aspiration, que le fluide véhiculé soit de l'eau ou de l'air.

Conformément à l'invention, on utilise:— un dispositif souple d'aspiration de fluide à grand débit comportant des moyens d'armature rigide constitués par des anneaux espacés et fixés dans des sections normales à l'axe et à l'intérieur de la paroi souple, la mise en tension étant uniformément répartie sur toutes les génératrices et sous les effets naturellement conjugués de la pression différentielle s'exerçant sur la paroi souple placée en appui sur les anneaux rigides et de la tension appliquée selon ses génératrices, la géométrie du tuyau souple se trouve en équilibre et parfaitement stabilisée sous la forme d'une suite de profilés concaves, entre les anneaux rigides.

Suivant une autre caractéristique de l'invention, le tuyau souple armaturé est une manche dans laquelle circule le fluide mis en dépression.

Suivant une autre caractéristique de l'invention le tuyau souple armaturé est un fourreau entourant une manche entièrement souple est dépourvue de moyens rigides à l'intérieur de laquelle circule le fluide tandis que d'autres moyens entretiennent dans le volume délimité par le fourreau et la manche souple une pression statique, en toutes sections du dispositif, inférieure à la pression qui règne dans la manche souple.

Les avantages d'un tel dispositif souple d'aspiration de fluide à grand débit et faible perte de charge résultent de l'arrangement des divers constituants qui concourent à l'obtention d'un rendement constructif élevé et d'un coût de réalisation et d'installation réduit. Les armatures tubulaires du fourreau peuvent être aisément optimisées en regard de contraintes de simple compression auxquelles elles sont soumises pour conférer par leur flottabilité positive un poids linéaire apparent nul au fourreau en immersion.

La paroi souple du fourreau travaillant en tension pure, sa réalisation à partir de câblés textiles permet de tirer le meilleur parti du matériau. La paroi de la manche souple à laquelle la pression relative interne confère une forme stable rigoureusement cylindrique est le siège de deux types de contraintes; une tension tangentielle de fait de la pression et une tension selon ses génératrices qui résulte uniquement du faible poids apparent du matériau constitutif une fois la manche en service.

La nature des matériaux souples utilisés facilité considérablement la fabrication, le transport, le stockage sur la plateforme ou sur le site à équiper ainsi que l'installation du dispositif qu'ils constituent. Ces caractéristiques sont de première importance sous le rapport du coût et des délais de mise en oeuvre et de relevage d'un tel dispositif.

Les éléments souples peuvent être réalisés de façon économique, sans tolérances précises ni investissements onéreux en outillages spécifiques. L'ensemble du dispositif est rigoureusement insensible à la corrosion marine.

L'enducton par calandrage d'un film organique judicieusement choisi sur la face interne de la manche souple permet de conférer à sa surface un poli spéculaire durable à faible coefficient de frottement et qui, dans le cas d'une utilisation en mer, dissuade la fixation des salissures biologiques en maintenant durablement les conditions d'une aspiration d'eau de mer à faible perte de charge.

Les caractéristiques et avantage de l'invention seront mieux compris à la lecture de la description qui va suivre de plusieurs exemples de réalisation et en se référant aux dessins annexés, dans lesquels:

—la figure 1 situe schématiquement le dispositif selon l'invention dans le cadre d'une installation de conversion de l'énergie thermique des mers,

— la figure 2 est une vue en élévation d'un exemple de réalisation de l'invention,

— la figure 2A est une vue en coupe selon la ligne III de la figure 2,

— la figure 2B représente un détail d'un exemple de la réalisation du fourreau,

— la figure 2C est une vue en élévation d'un autre mode de réalisation,

— la figure 3 illustre à titre d'exemple la procédure d'installation du dispositif selon l'invention sur une plate-forme flottante,

— la figure 4 représente en coupe selon la ligne III de la figure 2 une variante de la réalisation du fourreau du dispositif selon l'invention,

— la figure 5 est un second mode de réalisation de l'équilibrage hydrostatique du dispositif souple installé dans les conditions illustrées par la figure 2,

— la figure 6 illustre, à titre d'exemple, l'insertion du dispositif selon l'invention dans un circuit d'aspiration d'air vicié de puits de mine.

Sur la figure 1, on a représenté schématiquement une installation flottante de conversion d'énergie thermique des mers dans laquelle une plate-forme 1 ancrée par la ligne de mouillage 2 et éventuellement assistée d'un système de positionnement dynamique non figuré supporte un dispositif souple d'aspiration 3 selon l'invention et dont l'extrémité inférieure est équipée d'un lest 4 qui est agencé en pavillon d'entrée.

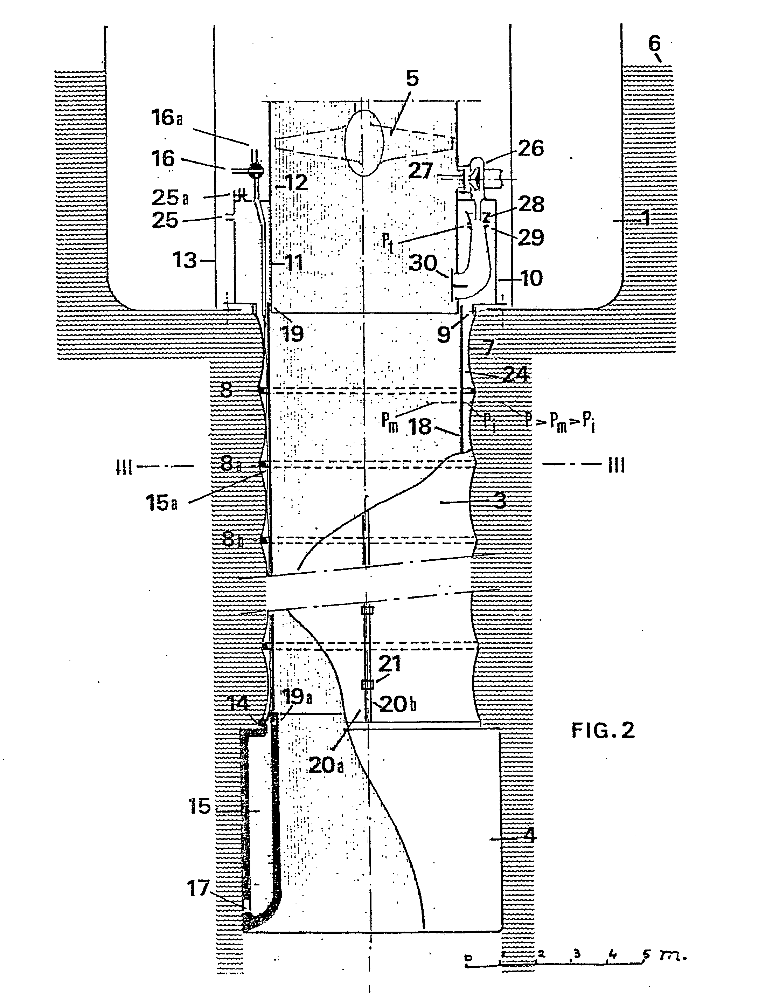

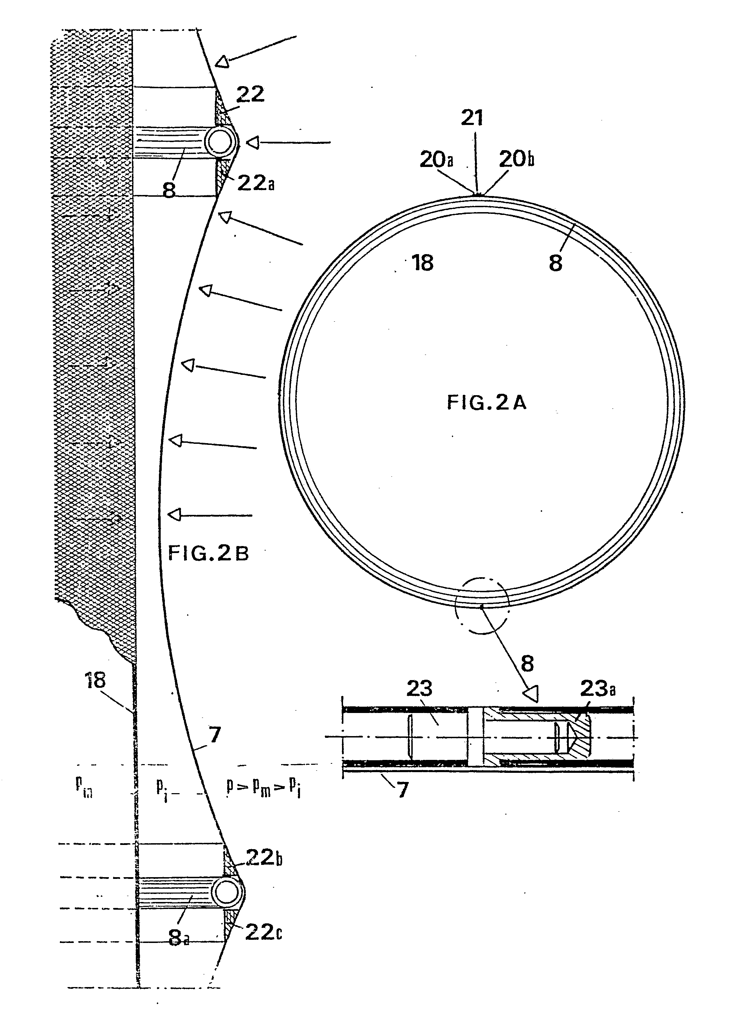

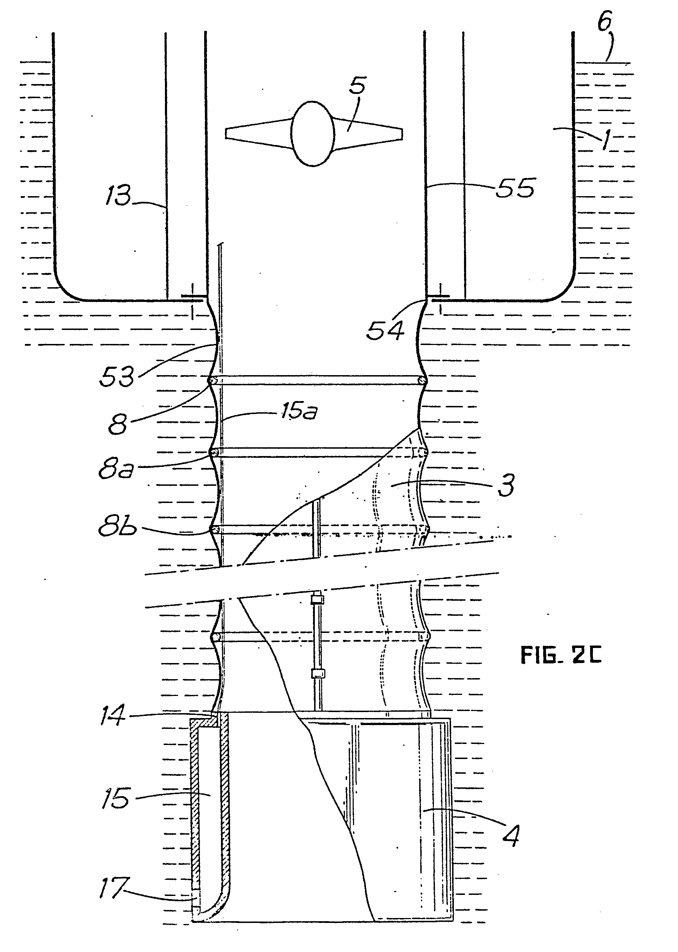

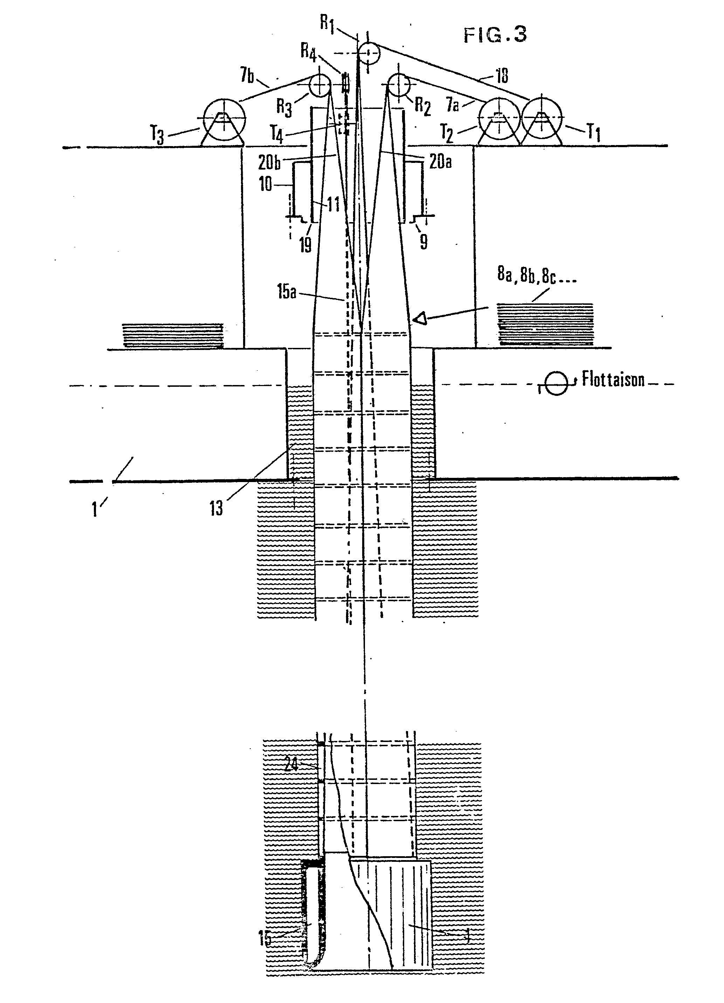

Sur les figures 2, 2A, 2B et 3, on a représenté un premier exemple de réalisation et d'installation du dispositif souple d'aspiration 3 équipé de son lest 4 selon l'invention, au moyen duquel une installation flottante 1 puise l'eau froide des profondeurs par une pompe 5 située au voisinage de la surface symbolisée par la ligne 6. Le dispositif comporte un fourreau souple 7 dont la forme généralement cylindrique est imposée à sa paroi par des cerceaux circulaires rigides 8, 8a, 8b ... régulièrement très espacés et disposés à l'intérieur dudit fourreau selon des plans normaux à ses génératrices. Ce fourreau est fixé à sa partie supérieure par des moyens connus sur le pourtour d'une embase circulaire 9 ménagée à la partie inférieure d'un carter annulaire 10 dont la paroi interne cylindrique 11 est prolongée vers le haut par un conduit 12 d'aspiration de la pompe 5. Le carter 10 est assujetti par une fixation étanche démontable sur le fond du puits 13 ménagé dans la plate-forme 1.

L'extrémité inférieure du fourreau 7 supporte un lest annulaire 4 par l'embase 14 sur laquelle elle est assujettie de façon étanche par des moyens connus. Le lest 4 constitue le pavillon d'entrée de l'eau aspirée par la pompe 5 et peut être avantageusement déballasté pour annuler pratiquement son poids apparent en immersion. Il comporte à cet effet une cavité 15 reliée par un moins une tuyauterie 15a à une source d'air comprimé 16 munie d'une mise à l'air libre 16a installée sur la plate-forme 1 et au moins un orifice de ballastage 17 situé à sa partie inférieure.

A l'intérieur du fourreau 7 est disposée un manche souple 18 fixée de façon étanche par des moyens connus à sa partie supérieure sur l'extrémité inférieure 19 de la paroi interne 11 du carter 10 et à sa partie inférieure sur l'embase circulaire 19a du lest 4. La paroi souple du fourreau 7 est confectionnée selon des procédés connus par assemblage de laizes de câblés textiles enduits et disposés parallèlement aux génératrices pour former au moins une nappe étanche refermée autour des cerceaux circulaires 8, 8a, 9b qui constituent son armature au moyen par exemple d'au moins une fermeture à glissière 20a, 20b qu'il est avantageux de verrouiller de proche en proche par des clips 21. Les cerceaux 8, 8a, 8b sont maintenus en place par rapport à la paroi par un système de cales profilées 22, 22a, 22b ... (fig. 2b) réalisées en matériau élastique et préalablement assujetties au pas choisi sur la paroi du fourreau 7 par collage, vulcanisation ou tout autre procédé d'attache mécanique.

L'espace interparois 24 compris entre le fourreau souple 7 et la manche souple 18 est rempli d'eau de mer, ainsi que le carter annulaire 10 par l'adduction 25, l'air résiduel étant purgé par le robinet 25a. Pour que la manche souple 18 prenne une forme parfaitement circulaire en toutes ses sections et ne s'aplatisse pas sous l'effet de la dépression créée par l'aspiration de la pompe 5, il faut et il suffit que, dans toutes les sections, la pression $(P_i)$ régnant dans l'interparois 24 soit sensiblement inférieure à la pression $(P_m)$ régnant dans la manche 18. Ce résultat est obtenu par le fonctionnement d'au moins une pompe 26 qui est branchée sur le clapet taré 27 monté sur la paroi du conduit 12 d'aspiration de la pompe 5 et qui alimente une trompe 28 aspirant dans l'espace annulaire 29 du carter 10 et refoulant à travers le clapet de non retour 30 monté également sur la paroi du conduit 11 d'aspiration de la pompe 5. Ainsi, la pression $P_i$ qui règne en toutes les sections de l'espace interparois 24 est réglée par la pression statique $(P_t)$ au col de la trompe 28, $P_t$ étant déterminé par le régime $(N\ t/min)$ de la pompe 26. En l'absence de fuites d'eau de mer vers l'interparois 24, la pompe 26 peut être stoppée dès que le réglage de la pression $P_i$ a été stabilisé. De préférence, un pressostat différentiel non représenté disposé entre l'intérieur du carter 10 et une prise de pression statique sur la paroi du conduit d'aspiration 11 commande la mise en marche ou l'arrêt de la pompe 26.

L'installation et le fonctionnement du système décrit sont faciles à comprendre et sont illustrés par la figure 3 dans le cas où la paroi du fourreau souple 7 est constituée de deux nappes 7a et 7b bordées de fermetures à glissière.

La manche souple 18, les deux demi-parois 7a et 7b du fourreau et la tuyauterie 15a de contrôle du ballastage du lest 4 stockées sur des tourets T1, T2, T3 et T4 vont être déroulées au fur et à mesure de l'immersion du lest, renvoyées à la verticale par des rouleaux R1, R2, R3 et R4 disposés à l'aplomb du puits 13 de la plateforme 1 à proximité duquel sont empilés les cerceaux d'armature 8a, 8b, 8c ... Les extrémités de la manche 18, puis des deux nappes 7a et 7b devant constituer la paroi du fourreau, ainsi que l'extrémité de la tuyauterie 15a sont d'abord fixées sur le lest 4 qui flotte déballasté dans le puits 13 grâce à sa cavité 15 remplie d'air au préalable. Le lest 4 est ensuite légèrement ballasté par la manoeuvre de la mise à l'air libre 16a et s'immerge en mettant sous légère tension la manche 18. Auf fur et à mesure de sa descente, les cerceaux 8, 8a, 8b ... sont entrouverts en jouant sur leur élasticité en flexion pour permettre de les circonscrire à la manche souple 18 cependant qu'ils sont aussitôt après refermés et verrouillés par leurs embouts 23 et 23a (fig. 2A) puis enchâssés entre les nappes 7a et 7b dont les lisières sont progressivement rapprochées bord à bord et solidarisées au moyen des fermetures à glissière 20a et 20b et que sont mis en place les clips de verrouillage 21. Simultanément, l'espace interparois 24 est rempli d'eau de façon à maintenir son niveau à celui de la surface de la mer et le poids apparent du lest 4 est maintenu à peu près constant par injection d'air comprimé dans sa cavité 15 par manoeuvre de la source 16. Lorsque la longueur prévue de manche souple a été filée, la traction qu'exerce sur elle son poids apparent est reprise par un moyen de serrage au-dessous de la base du carter 10 pour permettre la fixation étanche de son extrémité supérieure comme prévu sur l'embase 19 du conduit 11. Les nappes 7a et 7b du fourreau qui ne sont pas sous tension peuvent continuer à être filées sur une longueur supplémentaire préalablement définie par le calcul pour des raisons exposées plus loin, armaturées comme ci-dessus et finalement assujetties de façon étanche sur l'embase 9 du carter 10. Le carter 10 est alors affalé dans le puits 13 pour être fixé de façon étanche sur le fond de la plate-forme 1.

Le dispositif est alors prêt pour le réglage qui consiste à ballaster le lest 4 par dépressurisation progressive de sa cavité 15 au moyen de la mise à l'air libre 16a et à déprimer progressivement l'espace interparois 24 au moyen de la trompe 28. Sous les effets conjoints de la tension due à la traction exercée par le lest et de la pression différentielle qui s'établit entre le milieu marin ambiant et l'espace interparois 24, la paroi du fourreau 7 festonne entre les cerceaux 8, 8a, 8b ... pour former une série d'éléments de surfaces toriques.

La flèche prise par les câblés de la paroi du fourreau 7 s'appuyant alors sur les cerceaux dépend du rapport entre la traction exercée par le lest sur le fourreau et les efforts résultant de la pression différentielle qui charge normalement sa paroi externe. Le rétreint du fourreau, qui atteint son maximum dans le plan équatorial des surfaces toriques successives, est rendu possible par la compression de l'élastomère d'enrobage des câblés constitutifs, sans plissement de sa paroi. Corrélativement, la surlongueur du fourreau 7 par rapport à la manche souple d'aspiration 18 est résorbée par le festonnage de lar paroi du fourreau cependant qu'une charge croissante lui est appliquée par le lest. En fin de réglage, la manche 18 est complètement délestée de la charge du lest et n'est contrainte en tension que par son seul poids apparent relativement faible.

Le relevage du dispositif souple peut être effectué depuis la plate-forme support en inversant la séquence des opérations décrites ci-dessus.

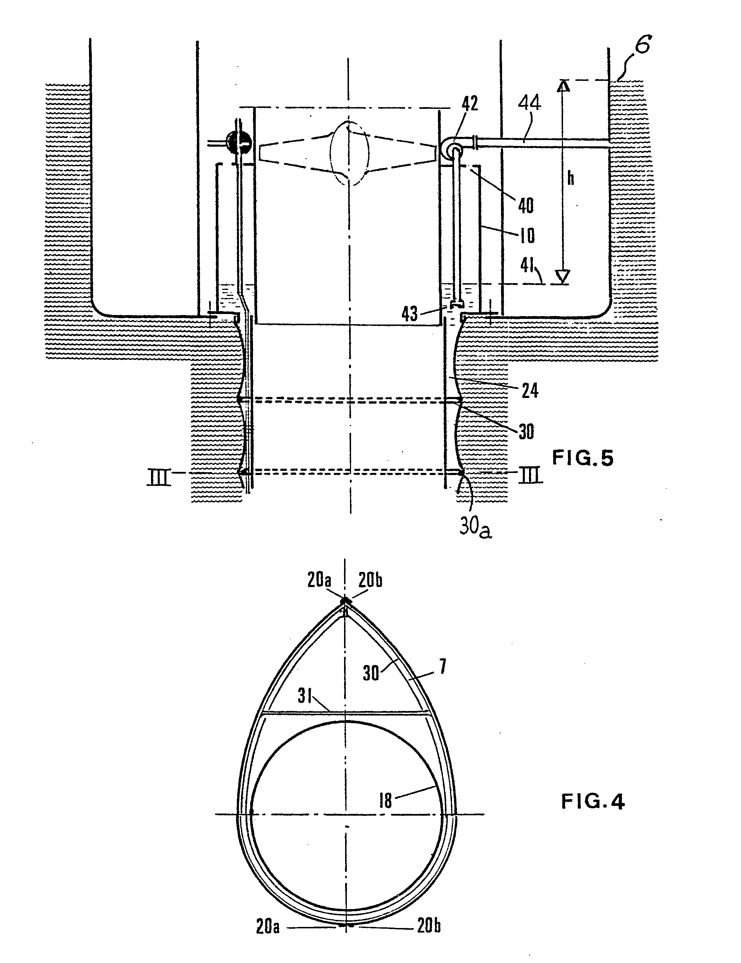

La figure 4 représente l'exemple d'un autre mode de réalisation du fourreau 7. Dans ce cas, la forme en plan effilée des armatures tubulaires 30, 30a, 30b ... impose à la paroi souple du fourreau 7 un profil de section hydrodynamique, ce qui réduit considérablement la traînée du dispositif souple au sein d'un milieu marin animé d'un courant significatif. Les armatures tubulaires 30, 30a, 30b qui ne sont soumises dans leur plan qu'à des charges de compression appliquées par les câblés constitutifs de la paroi du fourreau sous la pression relative exercée par le milieu ambiant sont avantageusement entretroisées par exemple par des tubes 31.

La figure 5 représente l'exemple d'un autre mode d'obtention de la dépression entretenue dans l'espace interparois 24 du dispositif selon l'invention. Dans ce cas, le carter 10 est en communication avec l'atmosphère à sa partie supérieure par l'orifice 40, et le niveau libre 41 de l'eau dans l'espace interparois est maintenu à une cote négative (h) par rapport à la surface de la mer 6 au moyen d'une pompe aspirante 42 munie d'un clapet de pied 43 qui refoule à la mer par sa tuyauterie 44. Le réglage de la dépression dans l'interparois peut s'effectuer par modification du niveau libre 41 dans le carter 10 prévu à cet effet.

La figure 6 représente l'exemple d'un autre mode d'installation du dispositif selon l'invention pour réaliser le circuit d'aspiration à faible perte de charge et grand débit d'air vicié d'un puits de mine. Dans ce cas, des tronçons rectilignes 3a, 3b ... du dispositif souple sont insérés entre des carters rigides 50a, 50b, 50c ... scellés sur fondations. Les tronçons de manche souple d'aspiration 18a, 18b ... sont tendus initialement par leurs extrémités fixées sur les carters rigides correspondants. De même, les tronçons de fourreau 7a, 7b ..., de longueur sensiblement égale à l'intervalle des carters correspondants, sont mis en place autour des tronçons de manche souple d'aspiration correspondants 18a, 18b ... La libre communication des espaces interparois 24a, 24b ... est assurée par les passages 51a, 51b ... ménagés au droit des carters rigides 50a, 50b ... La dépression des espaces interparois 24a, 24b ... ainsi interconnectés est obtenue par au moins un éjectair ou pompe à vide 52 dont le réglage est assuré au moyen d'un senseur manométrique différentiel non figuré branché entre l'espace interparois et l'atmosphère.

Le dispositif souple décrit selon l'invention présente l'immense avantage de s'accommoder des efforts alternés et aléatoires que la plate-forme flottante sur mer houleuse applique sur une conduite immergée suspendue, dont les effets sont considérablement réduits par la très faible inertie des composants, leur très grande résilience et l'amortissement visqueux induit par le déplacement vertical du fourreau dont la forme générale se manifeste comme un "empilage" de diabolos à paroi souple et élastique remplis d'eau de mer.

A ce titre, la liaison dispositif souple-plate-forme est considérablement simplifiée et ne nécessite pas de montage à la cardan ou à rotule étanche comme c'est le cas pour une conduite rigide dont la déformation sous l'effet conjoint du courant et de la traction du lest impose une telle articulation mécanique onéreuse et vulnérable.

Si besoin est, la plate-forme équipée du dispositif souple d'aspiration muni d'un fourreau à section profilée et hydrodynamique peut naviguer à faible vitesse sans perturber la bonne tenue ni le fonctionnement du dispositif selon l'invention. Une telle possibilité permet le déplacement saisonnier à faible vitesse d'une centrale flottante vers les sites favorisés par une température de surface plus élevée.

Enfin, en cas de menace de conditions météo-océanologiques extrêmes d'une telle ampleur que l'installation dans sa totalité ne puisse les affronter sans dommages, il est possible de déballaster le lest et de remonter rapidement le dispositif afin de préserver l'intégrité de l'ensemble.

Des modifications pourront être apportées sans pour autant sortir du cadre de la présente invention. Par exemple, on a représenté sur les figures la liaison du dispositif à une plate-forme flottante, mais il n'est pas exclu de mettre en oeuvre tout autre type d'installation côtière pourvu que ces installations présentent un tronçon de conduite rigide ou de tunnel cylindrique pour permettre le raccordement du dispositif souple d'aspiration.

Il est également possible de remplacer la plate-forme flottante portant une centrale de conversion de l'énergie thermique de la mer par une plate-forme naviguant à faible vitesse pour aspirer des nodules polymétalliques sur les fonds océaniques en utilisant le dispositif selon l'invention comme conduit d'une suceuse actionnée par insufflation d'air comprimé dans la manche souple, le dispositif étant d'autant plus économique à réaliser et à mettre en oeuvre que le diamètre de la conduite requis pour cet usage est nettement réduit.

Les fermetures à glissière du fourreau ou tout autre type de fermeture et les parois souples du fourreau et de la manche pourront être réalisées de façon connue en soi. Par exemple, elles pourront être constituées d'un matériau plastique ou élastique armé par des couches de fils ou par des nappes de fils tissés. L'armature de la paroi du fourreau pourra être réalisée à partir de fils d'aciers, ou fibres de verre, ou fibres polyester, ou fibres polyamides aromatiques commercialisées sous le nom de Kevlar, etc. Dans certains cas, et notamment pour l'aspiration d'air, les parois souples et plus particulièrement celle de la manche d'aspiration pourront être tout simplement confectionnées à partir de films plastiques dotés de bonnes caractéristiques mécaniques.

Les cerceaux circulaires ou les armatures profilées qui, suivant le cas retenu, constituent l'armature rigide du fourreau pourront être confectionnés à partir de tubes métalliques extrudés ou étirés résistant à la corrosion ou convenablement protégés contre celle-ci, ou bien, pour les plus petites dimensions, obtenus par moulage de résines renforcées de fibres.

Le mode de réalisation représenté à la figure 2C concerne une solution économique pour l'obtention d'une conduite souple pour l'aspiration à grand débit d'eau de mer profonde spécifiquement adaptée à l'alimentation en eau froide d'une centrale thermodynamique de l'énergie thermique des mers ainsi qu'il a été mentionné ci-dessus, ladite conduite étant installée à la verticale sous une plate-forme flottante, directement ou par l'intermédiaire d'une structure annexe voisine de la surface. Cette disposition permet, toutes choses égales par ailleurs, l'accroissement de l'espacement des moyens rigides associés à la paroi souple de la conduite avec lesquels elle coopère et, par conséquent, d'en réduire le diamètre dans le cas où une manche souple cylindrique lisse n'est pas installée comme mentionné ci-dessus à l'intérieur du fourreau souple armé de la conduite, ce qui supprime ipso-facto la dépression additionnelle prévue dans l'espace annulaire interparois et, par conséquent, diminue la charge desdits moyens rigides, l'accroissement de la perte de charge résultant du profil annelé de la conduite simplifiée étant alors compensé par l'augmentation de son diamètre pour un même débit considéré.

La figure 2C représente un autre mode de réalisation du dispositif souple d'aspiration 3 équipé de son lest 4 selon l'invention au moyen duquel une installation flottante 1 puise 1'eau froide des profondeurs par une pompe 5 située au voisinage de la surface symbolisée par la ligne 6. Le dispositif comporte seulement dans ce cas une manche 53 dont la forme généralement cylindrique est imposée à sa paroi par des anneaux circulaires tubulaires 8, 8a, 8b disposés dans des plans successifs perpendiculairement à l'axe de la conduite, l'espacement desdits anneaux étant défini de telle sorte que les efforts de compression qui leur sont appliqués par la paroi souple et qui les sollicitent au flambement général sensiblement dans leur plan équatorial soient approximativement de même intensité pour chacun d'eux, lesdits efforst procédant aux différents niveaux d'immersion des anneaux de la différence de pression entre le milieu marin et la colonne d'eau froide aspirée par la conduite, différence qui résulte notamment de l'intégration aux niveaux considérés de la perte de charge subie par la veine aspirée et de l'intégration de la différence de densité entre l'eau de mer froide aspirée et celle de l'eau du milieu marin. Cette manche 53 est fixée à sa partie supérieure par des moyens connus sur le pourtour d'une embase circulaire 54 ménagée à la partie inférieure d'un conduit 55 d'aspiration de la pompe 5. L'extrémité inférieure de la manche 53 supporte un lest annulaire 4 par une embase 14 sur laquelle elle est assujettie par des moyens connus. Le lest 4 constitue le pavillon d'entrée de l'eau aspirée par la pompe 5 et peut être avantageusement déballasté pour annuler pratiquement son poids apparent en immersion. Il comporte à cet effet une cavité 15 reliée à au moins une tuyauterie 15a à une source d'air comprimé munie d'une mise à l'air libre comme il a été mentionné ci-dessus et au moins un orifice de ballastage 17 situé à sa partie inférieure.

Dans le mode de réalisation précédent, les anneaux circulaires tubulaires associés à la paroi souple sont pressurisés intérieurement par un fluide moins dense que l'eau (air ou azote par exemple). Cette disposition permet, d'une part, de réduire leur poids apparent dans l'eau et, d'autre part, de précontraindre leur paroi en tension et réduire de ce fait les contraintes de compression dues à la sollicitation au flambement général desdits anneaux sous l'effet des efforts de compression collectés par la paroi souple de la conduite et appliqués sensiblement dans le plan équatorial des anneaux rigides et des sollicitations au flambement de leur section droite sous l'effet de la pression hydrostatique du milieu.

Toutes les installations décrites ci-dessus ne sont que des exemples de réalisation de l'invention. Ces diverses solutions technologiques adoptées peuvent être combinées entre elles de diverses façons pour résoudre un problème d'ensemble posé par une application particulière à un cas donné.

Le dispositif souple d'aspiration de fluide à grand débit et faible perte de charge s'applique particulièrement à la réalisation des installations de pompage des centrales flottantes ou côtières de conversion de l'énergie thermique de la mer, à la réalisation d'installations navigantes pour la récolte des nodules polymétalliques ou des saumures marines métallifères profondes, ou des agrégats sous-marins, ou d'espèces abondantes de la faune benthique ou abyssale.

Ce dispositif s'applique également à la réalisation d'émissaires côtiers de grand diamètre.

Enfin, le dispositif selon l'invention peut s'intégrer dans des systèmes économiques d'aspiration de très grands débits d'air chargé de gaz nocifs ou de poussières dans les puits de mines, ainsi que dans des systèmes de transport à très grand débit de pulvérulents par fluidisation pneumatique.

## Revendications

1. Dispositif souple d'aspiration de fluide à grand débit (3) comportant un tuyau souple (7, 53) maintenu en forme généralement cylindrique par des moyens d'armature rigide (8, 8a, 8b, 30) associés à la paroi souple dudit tuyau (7, 53) et mis en tension par une traction exercée parallèlement à l'axe du tuyau, la pression s'exerçant sur l'intérieur de la paroi souple est inférieure par rapport au milieu ambiant, caractérisé en ce que les moyens d'armature rigide sont constitués par des anneaux (8, 8a, 8b, 30) espacés et fixés dans des sections normales à l'axe et à l'intérieur de la paroi souple, en ce que la mise en tension est uniformément répartie sur toutes les génératrices et en ce que sous les effets naturellement conjugués de la pression différentielle s'exerçant sur la paroi souple placée en appui sur les anneaux rigides (8, 8a, 8b, 30) et de la tension appliquée selon ses génératrices, la géométrie du tuyau souple (7, 53) se trouve en équilibre et parfaitement stabilisée sous la forme d'une suite des profilés concaves, entre les anneaux rigides.

2. Dispositif suivant la revendication 1, caractérisé en ce que le tuyau souple armaturé (53) est une manche dans laquelle circule le fluide mis en dépression (fig. 2C).

3. Dispositif suivant la revendication 1, caractérisé en ce que le tuyau souple armaturé (7) est un fourreau entourant une manche (18) entièrement souple et dépourvue de moyens rigides à l'intérieur de laquelle circule le fluide, tandis que d'autres moyens (26—30; 42—44; 52) entretiennent dans le volume délimité par le fourreau (7) et la manche (18) souple une pression statique (Pi), en toutes sections du dispositif (3), inférieure à la pression (Pm) qui règne dans la manche souple (18).

4. Dispositif selon la revendication 2 ou 3, relié à une plate-forme flottante (1) et immergé verticalement caractérisé en ce que les moyens de mise en tension de la paroi de la manche souple armaturée (53) ou du fourreau (7) sont un lest (4) dont le poids exerce la tension appliquée selon les génératrices.

5. Dispositif selon la revendication 3, caractérisé en ce que les moyens qui entretiennent, au sein du fluide qui remplit complètement le volume (24) délimité par le fourreau (7) et la manche souple (18) d'aspiration, une pression statique (Pi) inférieure à celle (Pm) qui règne dans ladite manche souple (18), comportent au moins une trompe à eau (28) dont le col de venturi est en communication permanente avec ledit volume (24) entièrement clos, ladite trompe (28) étant alimentée, par une pompe auxiliaire (26) dont les conditions de débit affichées ou commandées par un senseur manomètrique différentiel branché entre ledit volume (24) et la veine du fluide aspiré par la manche souple (18) permettent de régler ladite pression statique (Pi) à la valeur choisie (fig. 2).

6. Dispositif selon la revendication 3, caractérisé en ce que le liquide qui occupe l'espace (24) compris entre le fourreau (7) et la manche souple (18) d'aspiration présente un niveau à l'air libre et en ce que les moyens (42—44) qui entretiennent au sein dudit liquide une pression statique (Pi) inférieure à celle (Pm) qui règne dans ladite manche souple (18) comportent au moins une pompe auxiliaire (42) branchée sur ledit espace (24) occupé par le liquide pour maintenir le niveau libre (41) dudit liquide à une cote déterminée au-dessous du niveau de la surface libre du liquide ambiant (6) et pour régler cette cote (fig. 5).

7. Dispositif selon la revendication 4, caractérisé en ce que le lest (4) comporte une cavité ballastable (15) en communication à sa partie inférieure avec le milieu ambiant et à sa partie supérieure avec au moins une tuyauterie (15a) reliant ladite cavité, d'une part, à une source d'air comprimé (16) et, d'autre part, à une vanne de mise à l'air libre (16a) installées sur la plate-forme (1) supportant le dispositif (3), l'injection ou la décharge d'air comprimé dans la cavité (15) du lest (4) permettant de chasser ou de laisser pénétrer le liquide ambiant dans ladite cavité (15) pour régler depuis la plate-forme (1) la valeur de la traction qu'exerce le lest (4) sur la paroi de la manche (53) armaturée ou du fourreau (7).

8. Dispositif selon la revendication 4 ou 7, caractérisé en ce que le lest (4) constitue le pavillon annulaire d'entrée de la manche (18) d'aspiration à la partie inférieure de laquelle ledit pavillon est assujetti.

9. Dispositif selon la revendication 2 ou 3, caractérisé en ce que les moyens rigides (8, 8a, 8b) associés à la paroi souple de la manche armaturée (53) ou à celle du fourreau (7) sont des cerceaux circulaires disposés dans des plans successifs et perpendiculaires à l'axe de ladite manche (53) ou dudit fourreau (7) pour leur conférer une forme généralement cylindrique de révolution.

10. Dispositif selon la revendication 2 ou 3 caractérisé en ce que les moyens rigides (8, 8a, 8b) associés à la paroi souple armaturée (53) ou à la paroi du fourreau (18) sont des cadres (30, 30a, 30b) formés en plan selon un profil hydrodynamique, lesdits cadres coopérant avec la paroi souple de la manche armaturée (53) ou du fourreau (18) pour leur conférer une forme dont la traînée hydrodynamique est réduite dans un courant fluide quasiment normal à leur axe (fig. 4).

11. Dispositif selon la revendication 9, ou 10 caractérisé en ce que les moyens rigides associés à la paroi souple de la manche armaturée (53) ou du fourreau (18) sont tubulaires et étanches et en ce que la flottabilité desdits moyens rigides dans l'eau équilibre sensiblement le poids apparent de la paroi souple de la manche armaturée (53) ou du fourreau (18).

12. Dispositif selon la revendication 11, caractérisé en ce que les moyens rigides tubulaires associés à la paroi souple de la manche armaturée (53) ou du fourreau (18) sont remplis d'un fluide sous pression.

13. Dispositif selon la revendication 2 ou 3, caractérisé en ce que la paroi souple de la manche armaturée (53) ou du fourreau (18) est constituée par au moins une nappe (7a, 7b) de structure textile enduite d'un matériau plastique, ou élastique dont les deux lisières parallèles à l'axe du fourreau (18) ou de la manche armaturée (53) sont maintenues bord à bord au fur et à mesure de l'association des moyens rigides à ladite paroi et sont ensuite solidarisées pour assurer la continuité de ladite paroi souple au moyen d'une fermeture étanche (20a, 20b).

14. Dispositif selon l'une quelconque des revendications 3, 5, 9, 10, 13 intégré à une installation d'aspiration d'air à grand débit, constitué de tronçons rectilignes successifs (3a, 3b) de longueur quelconque et faisant entre eux un angle quelconque, caractérisé en ce que la paroi souple du fourreau (7a, 7b) de chacun des tronçons (3a, 3b) est montée en faible tension entre des carters rigides annulaires (50a, 50b, 50c) scellés sur des fondations faisant partie de l'installation et en ce que le volume d'air délimité par la paroi souple des tronçons de fourreau (7a, 7b) rectilignes et la paroi des tronçons de manche souple (18a, 18b) que contiennent lesdits fourreaux est mis en dépression par rapport à la pression régnant dans la manche au moyen d'une trompe à air ou d'une aspiration auxiliaire (52) (fig. 6).

**Patentansprüche**

1. Biegsame Ansaugvorrichtung (3) für Fluid mit großem Debit mit einem biegsamen Rohr (7, 53), das mittels mit der biegsamen Wandung des Rohres (7, 53) verbundenen steifen Bewehrungen (8, 8a, 8b, 30) in im allgemeinen zylindrischer Form gehalten ist und durch mechanischen Zug parallel zur Achse des Rohres gespannt ist, wobei der an der Innenseite der biegsamen Wandung anliegende Druck kleiner als der Umgebungsdruck ist, dadurch gekennzeichnet, daß die steifen Bewehrungen voneinander beabstandete Ringe (8, 8a, 8b, 30) sind, die in zur Achse der biegsamen Wandung senkrechten Querschnittsflächen und innerhalb der biegsamen Wandung befestigt sind, daß die Spannung gleichmäßig auf alle Erzeugende verteilt ist, und daß die Geometrie des biegsamen Rohres (7, 53) unter Einwirkung der Effekte, die natürliche mit dem an der biegsamen Wandung, die auf den steifen Ringen (8, 8a, 8b, 30) angedrückt angeordnet ist, anliegenden unterschiedlichen Druck zusammenhängen, und unter Einwirkung der längs seiner Erzeugenden angelegten Spannung, sich im Gleichgewicht befindet und in Form einer Folge von konkaven Profilen zwischen den steifen Ringen genau stabilisiert ist.

2. Vorrichtung nach Anspruch 1, dadurch gekennzeichnet, daß das bewehrte biegsame Rohr (53) ein Schlauch ist, in dem das Fluid mit Unterdruck zirkuliert (Fig. 2c).

3. Vorrichtung nach Anspruch 1, dadurch gekennzeichnet, daß das bewehrte biegsame Rohr (7) eine Stulpmanschette ist, die einen vollkommen biegsamen Schlauch (18) ohne Versteifungen umhüllt, in dem das Fluid zirkuliert, während weitere Mittel (26—30; 42—44; 52) in dem durch die Stulpmanschette (7) und dem biegsamen Schlauch (18) begrenzten Raum in allen Bereichen der Vorrichtung (3) einen statischen Druck ($P_i$) aufrechterhalten, der kleiner als der in dem biegsamen Schlauch (18) herrschende Druck ($P_m$) ist.

4. Vorrichtung nach einem der Ansprüche 2 oder 3, die mit einer schwimmenden Plattform (1) verbunden und vertikal eingetaucht ist, dadurch gekennzeichnet, daß das Mittel zum Spannen der Wandung des biegsamen bewehrten Schlauchs (53) oder der Stulpmanschette (7) ein. Ballastkörper (4) ist, dessen Gewicht die längs der Erzeugenden angelegte Spannung erzeugt.

5. Vorrichtung nach Anspruch 3, dadurch gekennzeichnet, daß die Mittel, die das Fluid, das den durch die Stulpmanschette (7) und den biegsamen Ansaugschlauch (18) begrenzten Raum (24) vollständig ausfüllt, auf einem statischen Druck ($P_i$), der kleiner als der in dem biegsamen Schlauch (18) herrschende ist, halten, mindestens eine Wasserstrahlpumpe (28) aufweisen, deren Venturihals ständig mit diesem vollständig abgeschlossenen Raum (24) in Verbindung steht, wobei die Wasserstrahlpumpe (28) von einer Hilfspumpe (26) gespeist wird, deren von einem differentiellen Druckmesser, der zwischen der Pumpe (24) und dem durch den biegsamen Schlauch (18) angesaugten Fluidstrahl angeordnet ist, angezeigte oder geregelte Durchsätze es ermöglichen, den statischen Druck ($P_i$) auf den gewählten Druck zu regeln (Fig. 2).

6. Vorrichtung nach Anspruch 3, dadurch gekennzeichnet, daß die Flüssigkeit, die den Raum (24) zwischen der Stulpmanschette (7) und dem biegsamen Ansaugschlauch (18) einnimmt, einen Spiegel gegenüber der freien Atmosphäre aufweist, und daß die Mittel (42—

44), die diese Flüssigkeit auf einem statischen Druck ($P_i$), der kleiner als der Druck ($P_m$) in dem biegsamen Schlauch (18) ist, halten, mindestens eine Hilfspumpe (42) aufweisen, die an den von der Flüssigkeit eingenommenen Raum (24) angeschlossen ist, um den Flüssigkeitsspiegel (41) auf einem vorbestimmten Pegel unterhalb des Flüssigkeitsspiegels der umgebenden Flüssigkeit (6) zu halten, und um diesen Pegel zu regeln (Fig. 5).

7. Vorrichtung nach Anspruch 4, dadurch gekennzeichnet, daß der Ballastkörper (4) einen auffüllbaren Hohlraum (15) aufweist, der in seinem unteren Teil mit der Umgebung und in seinem oberen Teil mit mindestens einer Rohrleitung (15a) in Verbindung steht, die den Hohlraum einerseits mit einer Druckluftquelle (16) und andererseits mit einem auf der die Vorrichtung (3) tragenden Plattform (1) installierten Belüftungsventil (16a) verbindet, wobei das Ein- oder Ablassen von Druckluft in den Hohlraum (15) des Ballastkörpers (4) ermöglicht, die Flüssigkeit herauszudrücken oder in ihn eindringen zu lassen, um von der Plattform (1) aus die mechanische Zugspannung zu regeln, die der Ballastkörper (4) auf den bewehrten Schlauch (53) oder auf die Stulpmanschette (7) ausübt.

8. Vorrichtung nach Anspruch 4 oder 7, dadurch gekennzeichnet, daß der Ballastkörper (4) den ringförmigen Eintrittsstutzen des Ansaugschlauchs (18), an dessen unterem Teil der Stutzen befestigt ist, bildet.

9. Vorrichtung nach Anspruch 2 oder 3, dadurch gekennzeichnet, daß die mit der biegsamen Wand des bewehrten Schlauchs (53) oder mit der Stulpmanschette (7) verbundenen Versteifungen (8, 8a, 8b) zylindrische kreisförmige Reifen sind, die in aufeinanderfolgenden Ebenen und senkrecht zur Achse des Schlauchs (53) bzw. der Stulpmanschette (7) angeordnet sind, um ihnen eine im wesentlichen zylindrische Form zu geben.

10. Vorrichtung nach Anspruch 2 oder 3, dadurch gekennzeichnet, daß die mit der biegsamen bewehrten Wandung (53) oder mit der Wandung der Stulpmanschette (7) verbundenen Versteifungen (8, 8a, 8b) in ihrer Ebene nach einem hydrodynamischen Profil geformte Rahmen (30, 30a, 30b) sind, wobei diese Rahmen mit der biegsamen Wandung des bewehrten Schlauchs (53) bzw. der Stulpmanschette (7) zusammenwirken, um diesen eine Form zu geben, deren hydrodynamischer Widerstand in einer zu ihrer Achse im wesentlichen senkrechten Strömung verringert ist (Fig. 4).

11. Vorrichtung nach Anspruch 9 oder 10, dadurch gekennzeichnet, daß die mit der biegsamen Wandung des bewehrten Schlauchs (53) bzw. der Stulpmanschette (7) verbundenen Versteifungen rohrförmig und dicht sind, und daß die Schwimmfähigkeit der Versteifungen in Wasser in etwa das Gewicht der beigsamen bewehrten Wandung (53) oder der Stulpmanschette (7) ausgleicht.

12. Vorrichtung nach Anspruch 11, dadurch gekennzeichnet, daß die mit der biegsamen Wandung des bewehrten Schlauchs (53) bzw. der Stulpmanschette (7) verbundenen rohrförmigen Versteifungen mit einem Druckfluid gefüllt sind.

13. Vorrichtung nach Anspruch 2 oder 3, dadurch gekennzeichnet, daß die biegsame Wandung des bewehrten Schlauchs (53) bzw. der Stulpmanchette (7) aus mindestens einer mit einem plastischen oder elastischen Material überzogenen Decke (7a, 7b) mit textiler Struktur besteht, deren beide zur Achse der Stulpmanschette (7) bzw. des bewehrten Schlauchs (53) parallelen Webränder in dem Maße, wie die Versteifungen mit der Wandung verbunden werden, Kante an Kante gehalten und anschließend aneinander befestigt werden, um die Kontinuität der biegsamen Wandung mittels eines dichten Abschlusses (20a, 20b) zu gewährleisten.

14. Vorrichtung nach einem der Ansprüche 3, 5, 9, 10 oder 13, die in eine Anlage zum Absaugen von Luft mit großem Durchsatz integriert ist, und aus aufeinanderfolgenden gradlinigenTeilstücken (3a, 3b) beliebiger Länge besteht, die miteinander beliebige Winkel einschließen, dadurch gekennzeichnet, daß die biegsame Wandung der Stulpmanschette (7a, 7b) eines jeden Teilstücks (3a, 3b) unter schwacher Spannung zwischen den steifen ringförmigen Gehäusen (50a, 50b, 50c) angebracht sind, die an den zur Anlage gehörenden Fundamenten angegossen sind und, daß das von der biegsamen Wandung der gradlinigen Teilstücke (7a, 7b) und der Wandung der Teilstücke des biegsamen Schlauchs (18a, 18b), die die Stulpmanschetten beinhalten, abgegrenzte Luftvolumen gegenüber dem im Schlauch herrschenden Druch mittels einer Luftpumpe oder einer hiftsweisen Ansaugung (52) auf Unterdruck erhalten wird (Fig. 6).

**Claims**

1. Flexible device for sucking in heavy flows of fluid (3) comprising a flexible pipe (7, 53) held in generally cylindrical shape by rigid reinforcing means (8, 8a, 8b, 30) associated to the supple wall of said pipe (7, 53) and stretched by exerting a pulling force parallely to the axis of the pipe, the pressure being exerted on the inside of the supple wall is less with respect to the ambient medium, characterized in that the rigid reinforcing means are constituated by rings (8, 8a, 8b, 30) spaced out one from the other and fixed in sections normal to the axis and inside the supple wall, in that the stretching is evenly distributed over all the generatrices and in that under the naturally conjugated effects of the differential pressure exerted on the supple wall resting on the rigid rings (8, 8a, 8b, 30) and of the tension applied in the direction of the generatrices, the geometry of said flexible pipe (7, 53) is thus balanced and perfectly stabilized as a succession of concave sections, between the rigid rings.

2. Device according to claim 1, characterized in that the reinforced supple pipe (53) is a duct in which flows the fluid in a depressurized state.

3. Device according to claim 1, characterized in that the reinforced flexible pipe (7) is a sleeve enclosing a duct (18) which is entirely supple and devoid of any rigid means, inside which flows the fluid, whereas other means (24—30; 42—44; 52) maintain inside the volume defined by the sleeve (7) and the flexible duct (18) a static pressure (Pi) in every section of the device (3) which is less than the pressure (Pm) prevailing in the flexible duct (18).

4. Device according to claim 2 or 3, connected to an offshore platform (1) and immersed vertically, characterized in that the means provided for stretching the wall of the reinforced flexible pipe (53) or of the sleeve (7) are a ballast (4) whose weight produces the tension applied in the direction of the generatrices.

5. Device according to claim 3, characterized in that the means provided for maintaining, within the fluid which entirely fills the volume (24) defined by the sleeve (7) and the flexible suction duct (18), a static pressure (Pi) which is less than the pressure (Pm) prevailing in said flexible duct (18), comprise at least a water pump (28) whose venturi pipe is permanently connected with with the said entirely closed volume (24), said pump (28) whose flow rates, displayed or controlled by a differential manometric sensor between said volume (24) and the stream of fluid sucked up by the flexible duct (18), enable to regulate said static pressure (Pi) to the selected value (Fig. 2).

6. Device according to claim 3, characterized in that the liquid filling the space (24) between the sleeve (7) and the flexible suction duct (18) has a level in the open and in that the means (42—44) exerting within the liquid a static pressure (Pi) which is less than that (Pm) prevailing inside said flexible duct (18), comprise at least one auxiliary pump (42) connected on said space (24) occupied by the liquid to keep the free level (41) of said liquid to a predetermined height below the level of the free surface of the ambient liquid (6) and to control said height (Fig. 5).

7. Device according to claim 4, characterized in that the ballast (4) comprises a ballastable cavity (15) which communicates at its lower part with the ambient medium and at its upper part with at least one pipe (15a) connecting said cavity, on the one hand, to a source of compressed air (16) and on the other hand, to an outlet valve (16a) both of which are installed on the platform (1) supporting the device (3), the injection or discharge of compressed air into the cavity (15) of the ballast (4) permitting to expel the ambient liquid from the cavity (15) or to let it in, in order to regulate from the platform (1) the value of the pulling force exerted by the ballast (4) on the wall of the reinforced pipe (53) or of the sleeve (7).

8. Device according to claim 4 or 7; characterized in that the ballast (4) constitute the annular inlet pavillion of the suction duct (18) at the lower part of which said pavillion is fastened.

9. Device according to claim 2 or 3, characterized in that the rigid means (8, 8a, 8b) associated to the supple wall of the reinforced pipe (53) or to that of the sleeve (7) are circular hoops disposed in successive planes which are perpendicular to the axis of said pipe (53) or said sleeve (7) in order to give them a generally cylindrically revolving shape.

10. Device according to claim 2 or 3, characterized in that the rigid means (8, 8a, 8b) associated to the reinforced supple wall (53) or to the wall of the sleeve (18) are frames (30, 30a, 30b) which are flat and have a streamlined profile, said frames cooperating with the supple wall of the reinforced pipe (53) or of the sleeve (18) in order to give them a shape whose streamlined trail is reduced in a fluid flow which virtually perpendicular to their axis (Fig. 4).

11. Device according to claim 9, or 10, characterized in that the rigid means associated to the supple wall of the reinforced pipe (53) or of the sleeve (18) are tubular and sealed and in that the buoyancy of said rigid means in the water substantially balances the apparent weight of the supple wall of the reinforced pipe (53) or of the sleeve (18).

12. Device according to claim 11, characterized in that the rigid tubular means associated to the supple wall of the reinforced pipe (53) or of the sleeve (18) are filled with fluid under pressure.

13. Device according to claim 2 or 3, characterized in that the supple wall of the reinforced pipe (53) or of the sleeve (18) is constituted by at least a layer (7a, 7b) of textile structure coated with a plastic or elastic material of which the two selvedges parallel to the axis of the sleeve (18) or of the reinforced pipe (53) are kept edge-to-edge as and when the rigid means become associated to said wall, and they are then connected together to ensure continuity of said wall by means of a sealed closure (20a, 20b).

14. Device according to one of claims 3, 5, 9, 10, 13 integrated to an installation for sucking in heavy air flows, constituted by successive rectilinear sections (3a, 3b) of any length, and forming between them an angle of any size, characterized in that the supple wall of the sleeve (7a, 7b) of each section (3a, 3b) is mounted with low tension between annular rigid housings (50a, 50b, 50c) fixed on foundations forming part of the installation and in that the volume of air defined by the supple wall of the rectilinear sections of sleeve (7a, 7b) and the wall of the sections of flexible sleeve (18a, 18b) which said sleeves contain, is depressurized with respect to the pressure prevailing in the sleeve, by means of an air pump or of an auxiliary suction means (52) (Fig. 6).

FIG.1

FIG. 2

FIG.2A

FIG.2B

$p_{in}$    $p_i$    $p > p_m > p_i$

FIG. 2C

FIG.3

FIG. 5

FIG. 4

FIG. 6